# EUROPEAN PATENT APPLICATION

(11) **EP 4 465 602 A1**
(43) Date of publication of application: **20.11.2024**
(21) Application number: 23740010.6
(22) Date of filing: 10.01.2023
(51) Int. Cl.: H04L 27/00

(54) **SRS PORT MAPPING METHOD AND APPARATUS, AND TERMINAL**

(30) Priority: 14.01.2022 CN 202210045015
(71) Applicant: VIVO MOBILE COMMUNICATION CO., LTD., Dongguan, Guangdong 523863 (CN)
(72) Inventor: ZHENG, Kaili, Dongguan, Guangdong 523863 (CN); SHI, Yuan, Dongguan, Guangdong 523863 (CN); TAMRAKAR, Rakesh, Dongguan, Guangdong 523863 (CN)
(74) Representative: Lavoix
(86) International application number: PCT/CN2023/071567
(87) International publication number: WO 2023/134668

(57) **Abstract**

This application pertains to the field of communication technologies, and discloses an SRS port mapping method and apparatus, and a terminal. The method includes: mapping, by a terminal, M port groups to N OFDM symbols, where M and N are both integers greater than or equal to 1, M is greater than or equal to N, ports of a target SRS include ports of one or more SRS resources, and the ports of the SRS resources are formed by the M port groups.

## Description

### CROSS-REFERENCE TO RELATED APPLICATIONS

This application claims priority to Chinese Patent Application No. 202210045015.4, filed in China on January 14, 2022, which is incorporated herein by reference in its entirety.

### TECHNICAL FIELD

This application pertains to the field of communication technologies, and specifically relates to an SRS port mapping method and apparatus, and a terminal.

### BACKGROUND

In a new radio (New Radio, NR) system, a sounding reference signal (Sounding Reference Signal, SRS) may be used for beam management, codebook-based transmission, non-codebook-based transmission, and antenna-switched sending. A terminal may obtain a plurality of SRS resource sets by using higher layer signaling. Each SRS resource set configuration includes its usage, periodicity, and other configurations.

Currently, a quantity of SRS ports supported by SRS port mapping is limited. For example, only one SRS port, two SRS ports, or four SRS ports are supported. In other words, the existing port mapping manner has limitations, and the port mapping manner is not flexible enough.

### SUMMARY

Embodiments of this application provide an SRS port mapping method and apparatus, and a terminal to resolve a problem that an existing SRS port mapping manner lacks flexibility.

According to a first aspect, an SRS port mapping method is provided and includes:
mapping, by a terminal, M port groups to N orthogonal frequency division multiplexing OFDM symbols, where M and N are both integers greater than or equal to 1, M is greater than or equal to N, ports of a target sounding reference signal SRS include ports of one or more SRS resources, and the ports of the SRS resources are formed by the M port groups.

According to a second aspect, an SRS port mapping apparatus is provided and includes:
a mapping module, configured to map M port groups to N orthogonal frequency division multiplexing OFDM symbols, where M and N are both integers greater than or equal to 1, M is greater than or equal to N, ports of a target sounding reference signal SRS include ports of one or more SRS resources, and the ports of the SRS resources are formed by the M port groups.

According to a third aspect, a terminal is provided. The terminal includes a processor, a memory, and a program or instructions stored in the memory and capable of running on the processor. When the program or instructions are executed by the processor, the steps of the SRS port mapping method according to the first aspect are implemented.

According to a fourth aspect, a readable storage medium is provided. The readable storage medium stores a program or instructions. When the program or instructions are executed by a processor, the steps of the SRS port mapping method according to the first aspect are implemented.

According to a fifth aspect, a chip is provided. The chip includes a processor and a communication interface. The communication interface is coupled to the processor. The processor is configured to run a program or instructions on a network-side device to implement the steps of the SRS port mapping method according to the first aspect.

In the embodiments of this application, the terminal maps the M port groups to the N OFDM symbols, where M and N are both integers greater than or equal to 1, M is greater than or equal to N, the ports of the target SRS include the ports of the one or more SRS resources, and the ports of the SRS resources are formed by the M port groups. In this way, the ports of the SRS resources can be mapped to the OFDM symbols, and the mapping is not limited by a quantity of the ports of the SRS resources. This can improve flexibility of port mapping and further improve communication performance.

### BRIEF DESCRIPTION OF DRAWINGS

FIG. 1 is a structural diagram of a wireless communication system according to an embodiment of this application;
FIG. 2 is a flowchart of an SRS port mapping method according to an embodiment of this application;
FIG. 3a to FIG. 3f are schematic diagrams for mapping ports of SRS resources to OFDM symbols according to embodiments of this application;
FIG. 4 is a structural diagram of an SRS port mapping apparatus according to an embodiment of this application;
FIG. 5 is a structural diagram of a communication device according to an embodiment of this application; and
FIG. 6 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects. The term "transmission" in this application means signal transmission, and not signal sending in a narrow sense.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

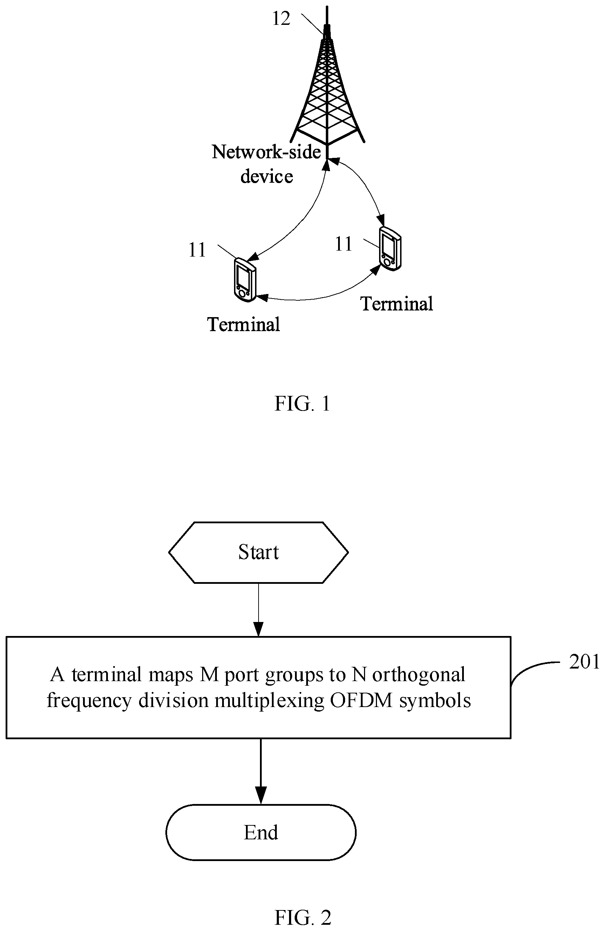

FIG. 1 is a structural diagram of a wireless communication system to which an embodiment of this application may be applied. The wireless communication system includes a terminal 11 and a network-side device 12. The terminal 11 may also be referred to as a terminal device or a user terminal (User Equipment, UE). The terminal 11 may be a terminal-side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes a smart band, a headphone, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved NodeB, eNB), a home NodeB, a home evolved NodeB, a wireless local area network (Wireless Local Area Network, WLAN) access point, a Wi-Fi node, a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

An SRS port mapping method provided in the embodiments of this application is hereinafter described in detail by using specific embodiments and application scenarios thereof with reference to the accompanying drawings.

FIG. 2 is a flowchart of an SRS port mapping method according to an embodiment of this application. The SRS port mapping method includes the following step.

Step 201: A terminal maps M port groups to N orthogonal frequency division multiplexing (Orthogonal Frequency Division Multiplexing, OFDM) symbols, where M and N are both integers greater than or equal to 1, M is greater than or equal to N, ports of a target SRS include ports of one or more SRS resources, and the ports of the SRS resources are formed by the M port groups.

Specifically, the ports of the target SRS include the ports of the one or more SRS resources. For ports of each SRS resource, the ports of the SRS resources are grouped to obtain the M port groups, and the port groups are mapped to the N OFDM symbols respectively. A quantity of ports of an SRS resource may be 1, 2, 4, 8, or the like.

In a case that the ports of the target SRS include ports of one SRS resource, the target SRS may be understood as the SRS resource.

In this embodiment, the terminal maps the M port groups to the N OFDM symbols, where M and N are both integers greater than or equal to 1, M is greater than or equal to N, the ports of the target SRS include the ports of the one or more SRS resources, and the ports of the SRS resources are formed by the M port groups. In this way, the ports of the SRS resources can be mapped to the OFDM symbols, and the mapping is not limited by a quantity of the ports of the SRS resources. This can improve flexibility of port mapping and further improve communication performance.

In the foregoing descriptions, time domain positions of the N OFDM symbols are determined in at least one of the following manners:
(1) agreed by a network-side device and the terminal by default, where for example, the time domain positions of the N OFDM symbols are agreed by the network-side device and the terminal by default as N consecutive time domain positions; and
(2) configured or indicated by the network-side device, where for example, the N OFDM symbols may be consecutive or inconsecutive OFDM symbols.

Configuring or indicating by the network-side device may be configuring by using radio resource control (Radio Resource Control, RRC) signaling, and/or indicating by using media access control control element (Medium Access Control Control Element, MAC CE) signaling, and/or indicating by using downlink control information (Downlink Control Information, DCI) signaling, for example:
1. directly configuring indexes of the N OFDM symbols by using RRC signaling, or configuring, by using RRC signaling, a plurality of groups using the N OFDM symbols as elements, and indicating indexes of the groups; or
2. configuring, by using RRC signaling, a plurality of groups using the N OFDM symbols as elements, and then indicating indexes of the groups by using MAC CE or DCI signaling.

In an embodiment of this application, at least one of a value of M, a value of N, a quantity of ports corresponding to each of the M port groups, port numbers corresponding to each of the M port groups, a quantity of ports mapped to each OFDM symbol, and port numbers mapped to each OFDM symbol is determined in one of the following manners:
(1) agreed by a network-side device and the terminal by default; and
(2) configured or indicated by the network-side device, which may be configured by using RRC signaling, and/or indicated by using MAC CE signaling, and/or indicated by using DCI signaling.

In the following description, it is assumed that ports of the SRS resource are 8 ports (port) (hereinafter 8 ports as an example for brevity):
Example 1: M = 2 port groups are configured by using RRC signaling, where port group 1 includes four ports whose port numbers are {1000, 1001, 1002, 1003} respectively, and port group 2 also includes four ports whose port numbers are {1004, 1005, 1006, 1007} respectively. In this case, according to the default agreement by the network-side device and the terminal, the two port groups are mapped to N = 2 OFDM symbols. Optionally, the port numbers in the port groups, or the value of M, and the port numbers may be updated by using MAC CE or DCI signaling.
Example 2: N = 2 OFDM symbols are configured by using RRC signaling. In this case, according to the default agreement by the network-side device and the terminal, M = 2 port groups are mapped on two OFDM symbols, where port group 1 includes four ports whose port numbers are { 1000, 1001, 1002, 1003} respectively, and port group 2 also includes four ports whose port numbers are { 1004, 1005, 1006, 10071 respectively.

In an embodiment of this application, there is an association relationship between at least two of a value of M, a value of N, a quantity of ports corresponding to each of the M port groups, port numbers corresponding to each of the M port groups, a quantity of ports mapped to each OFDM symbol, port numbers mapped to each OFDM symbol, a comb structure of the target SRS, a quantity of repetitions of the target SRS, and a start symbol position of the target SRS. In other words, one of the foregoing items may be derived from at least one of other items. Specific examples are as follows:
(1) The value of N and/or the quantity of ports corresponding to each of the M port groups may be derived from the value of M; the value of M and/or the quantity of ports corresponding to each of the M port groups may be derived from the value of N; and the quantity of ports mapped to each OFDM symbol may be derived from the values of M and N.
(2) The value of N is associated with the quantity R of repetitions of the SRS. For example, assuming that the ports of the SRS resource are 8 ports:
   when R = 1, the value of N may be 2, 3, or 4;
   when R = 2, the value of N may be 2, 3, or 4; or
   when R = 4, the value of N may be 2 or 3.
(3) The value of N is associated with the start symbol position of the target SRS. It needs to be ensured that the N OFDM symbols are located in a same slot (slot), that is, the N OFDM symbols are located in the same slot.
   Using 8 ports as an example, this embodiment provides a specific implementation of mapping port groups to N OFDM symbols respectively after ports of an SRS resource are grouped. As shown in Table 1, Table 1 provides a value range of the start symbol position *l*₀ of the target SRS when the quantity R of repetitions of the SRS and the quantity N of OFDM symbols are different values. 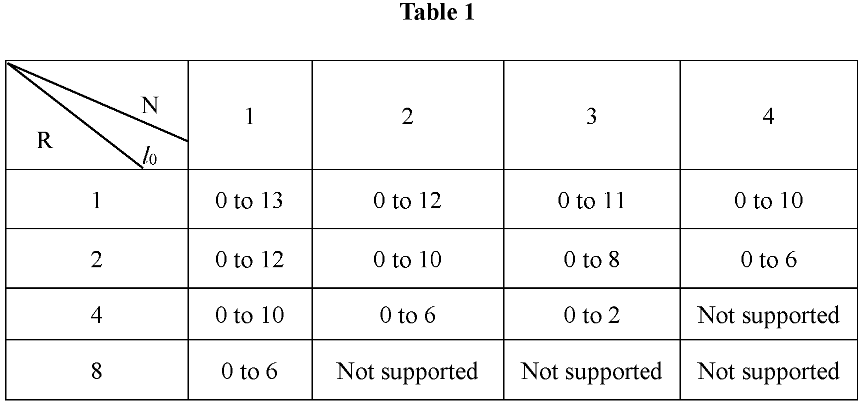
(4) Quantities of ports in port groups on the OFDM symbols may be the same or different. Using 8 ports as an example:
   when M = N = 2, the quantity of ports mapped to each OFDM symbol is 4;
   when M = N = 3, quantities of ports mapped to the OFDM symbols may be respectively 4, 2, and 2, or 2, 4, and 2, or 2, 2, and 4;
   when M = N = 4, quantities of ports mapped to the OFDM symbols may be respectively 2, 2, 2, and 2;
   when M = 4 and N = 2, quantities of ports mapped to the OFDM symbols may be respectively (2+2) and (2+2); or
   when M = 4 and N = 3, quantities of ports mapped to the OFDM symbols may be respectively (2+2), 2, and 2, or 2, (2+2), and 2, or 2, 2, and (2+2),
   where (2+2) indicates that two port groups (each port group includes two ports) are mapped to one OFDM symbol.
   Preferably, the M port groups correspond to a same quantity of ports.
(5) The value of M, the value of N, the quantity of ports corresponding to each of the M port groups, and the port numbers corresponding to each of the M port groups may be associated with the comb (comb) structure (that is, comb 2/4/8) of the target SRS and/or the quantity of repetitions of the target SRS.

Using 8 ports as an example, this embodiment provides a specific implementation method for mapping port groups to N OFDM symbols respectively after ports of an SRS resource are grouped.

Case 1: The comb structure of the target SRS is comb 2. The 8 ports are grouped into two port groups. It is assumed that port group 1 is ports { 1000, 1002, 1004, 1006}, and that port group 2 is ports {1001, 1003, 1005, 1007}.

The quantity R of repetitions of the target SRS is set to 1. In this case, ports of port group 1 are mapped to one OFDM symbol, and ports of group 2 are mapped to another OFDM symbol, that is, N = 2.

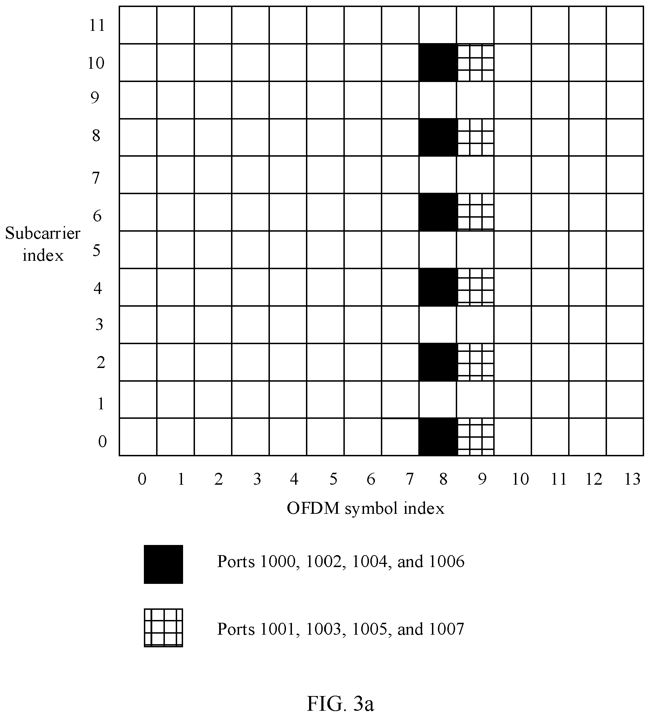

As shown in FIG. 3a, port group 1 and port group 2 are mapped to two adjacent OFDM symbols.

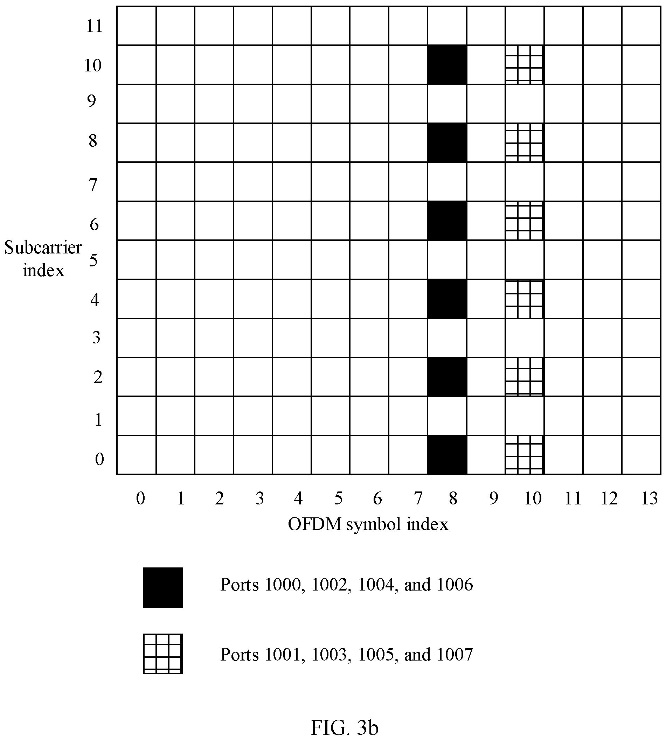

As shown in FIG. 3b, port group 1 and port group 2 are mapped to two nonadjacent OFDM symbols, and OFDM symbol positions corresponding to the two port groups may be configured by using RRC signaling, or indicated by using MAC CE or DCI signaling. In addition, the mapping to the OFDM symbols may be performed according to a rule agreed by the network side and the terminal side by default.

Case 2: The comb structure of the target SRS is comb 2. The 8 ports are grouped into two port groups. It is assumed that port group 1 is ports { 1000, 1002, 1004, 1006}, and that port group 2 is ports {1001, 1003, 1005, 1007}.

The quantity R of repetitions of the target SRS is set to 2. In this case, ports of port group 1 are mapped to two OFDM symbols, and ports of port group 2 are mapped to other two OFDM symbols, that is, N = 4.

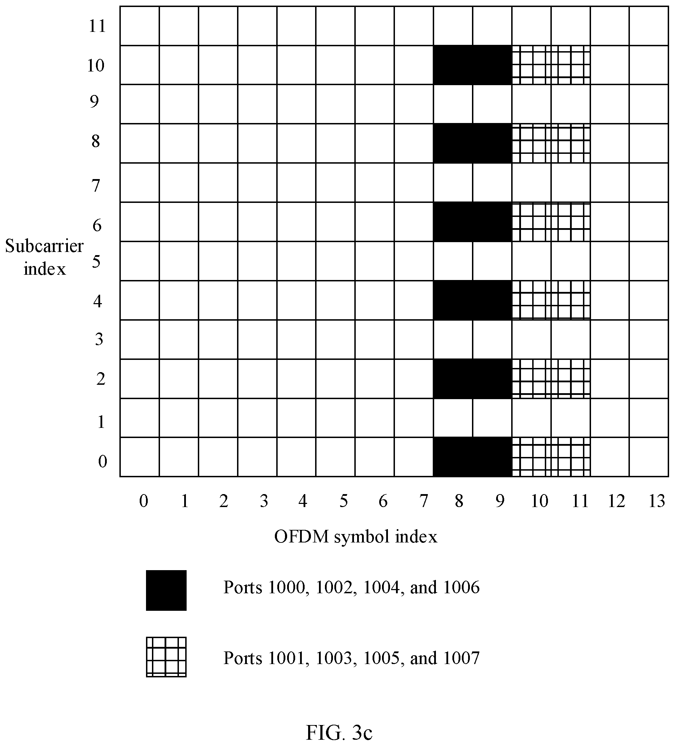

As shown in FIG. 3c, port group 1 is mapped to symbols 8 and 9, and two repetitions of the target SRS are on symbols 8 and 9. Port group 2 is mapped to symbols 10 and 11, and two repetitions of the target SRS are on symbols 10 and 11.

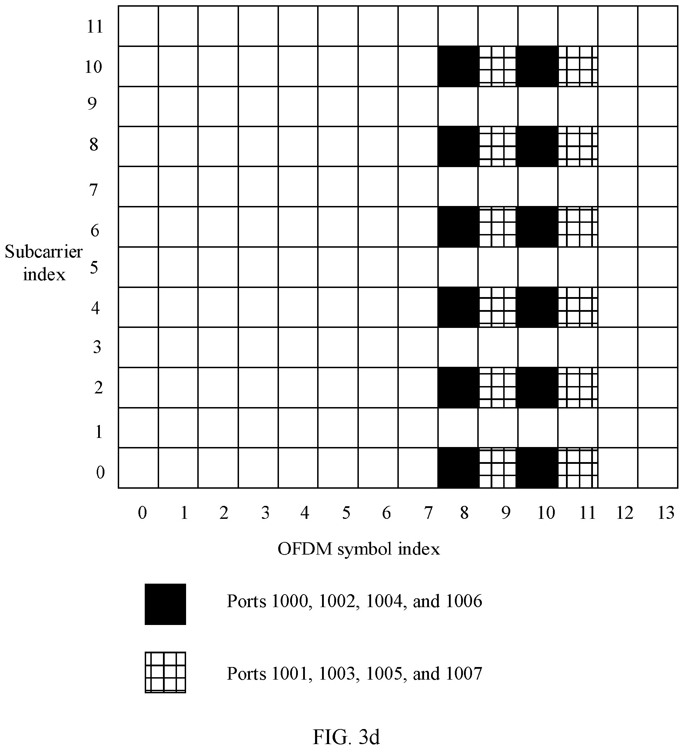

As shown in FIG. 3d, port group 1 is mapped to symbols 8 and 10, and two repetitions of the SRS are on symbols 8 and 10. Port group 2 is mapped to symbols 9 and 11, and two repetitions of the target SRS are on symbols 9 and 11.

Case 3: The comb structure of the target SRS is comb 4. The 8 ports are grouped into four port groups. It is assumed that port group 1 is ports { 1000, 1004}, and that port group 2 is ports { 1001, 1005}, and that port group 3 is ports { 1002, 1006}, and that port group 4 is ports { 1003, 1007}.

The quantity R of repetitions of the target SRS is set to 1.

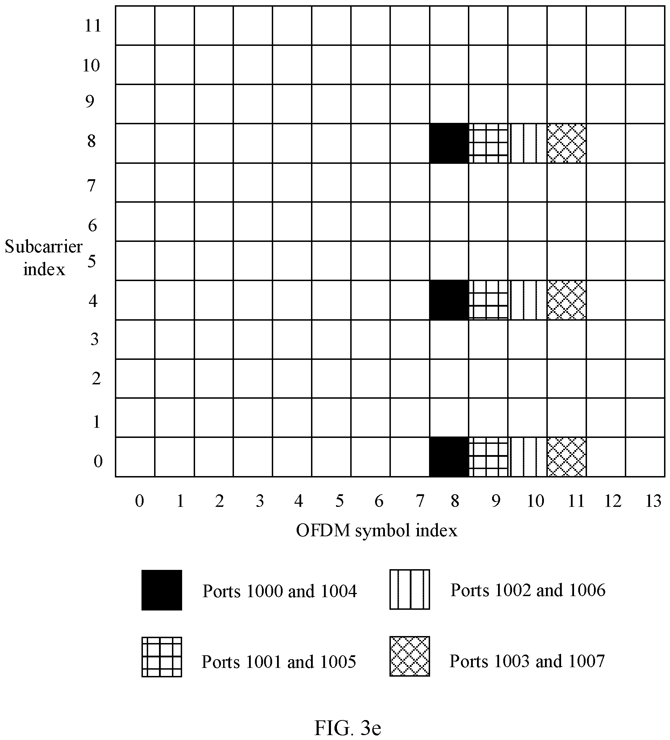

As shown in FIG. 3e, ports of port group 1, port group 2, port group 3, and port group 4 are separately mapped to one OFDM symbol, that is, N = 4.

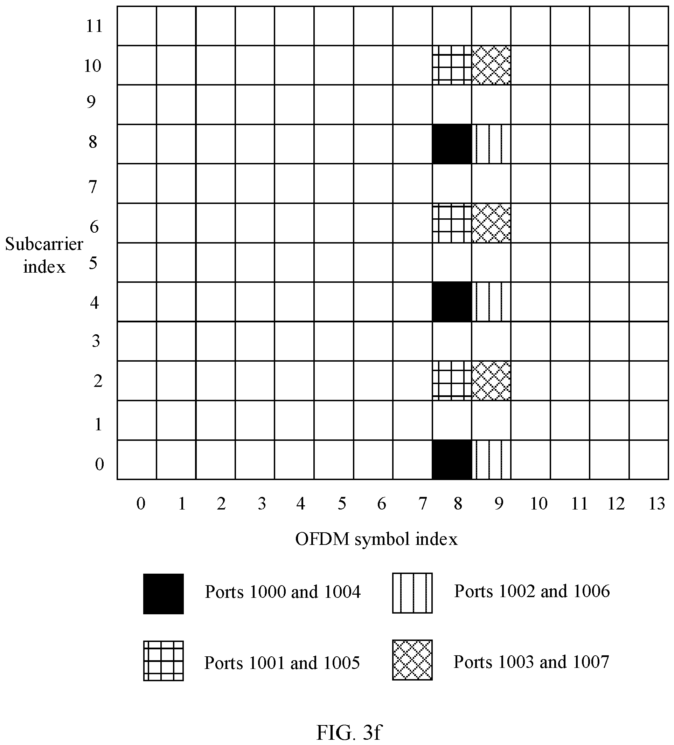

As shown in FIG. 3f, ports of port group 1 and port group 2 are mapped to one OFDM symbol; and ports of port group 3 and port group 4 are mapped to another OFDM symbol, that is, N = 2.

In the foregoing descriptions, the M port groups meet at least one of the following transmission characteristics:
the M port groups correspond to a same cyclic shift;
the M port groups correspond to a same frequency domain mapping position;
the M port groups correspond to same antenna virtualization;
the M port groups correspond to same precoding;
the M port groups correspond to same analog beamforming;
the M port groups correspond to same transmit power; and
frequency hopping is not allowed among the M port groups.

In an embodiment of this application, a first port group is any one of the M port groups, and port mapping is performed on the first port group according to a mapping rule corresponding to a quantity of ports in the first port group.

For example, using 8 ports as an example, if M = 2, and each port group includes 4 ports, ports on each OFDM symbol are mapped according to a mapping rule of 4 ports in a related protocol. To be specific, ports mapped to one OFDM symbol are {1000, 1001, 1002, 1003}, and ports mapped to another OFDM symbol are {1004, 1005, 1006, 1007}.

In an embodiment of this application, the ports of the target SRS include ports of a plurality of SRS resources, and the plurality of SRS resources include one of the following:
SRS resources in an SRS resource set;
SRS resources in a plurality of SRS resource sets; and
SRS resources determined based on a same resource list.

Further, the plurality of SRS resources may be indicated by using an SRS resource indicator (SRS resource indicator, SRI).

In an embodiment of this application, a quantity of the ports of the target SRS is a sum of quantities of ports of all SRS resources in a target SRS resource set;
or
a quantity of the ports of the target SRS is a sum of quantities of ports of a part of SRS resources in a target SRS resource set, where
the target SRS resource set includes one SRS resource set or a plurality of SRS resource sets.

In the foregoing descriptions, in a case that the target SRS resource set includes one SRS resource set, the part of SRS resources are configured or indicated by a network-side device. For example, the network-side device configures or indicates a resource identifier (ID) of each SRS resource in the part of SRS resources.

Further, in a case that the target SRS resource set includes one SRS resource set, SRS resource identifiers of SRS resources in the part of SRS resources are adjacent. A quantity of SRS resources in the part may be configured or indicated by a network-side device, or agreed by the network-side device and the terminal by default.

Further, a first SRS resource in the part of SRS resources is determined in at least one of the following manners:
agreed by a network-side device and the terminal by default; and
configured or indicated by the network-side device.

The first SRS resource is used to determine a start SRS resource among a plurality of SRS resources whose SRS resource identifiers are adjacent.

In an embodiment of this application, in a case that the target SRS resource set includes one SRS resource set, an association relationship between SRS resources in the part of SRS resources meets at least one of the following:
the association relationship is configured or indicated by a network-side device; and
the association relationship is that the SRS resources in the part of SRS resources have a same spatial relationship and/or quasi-co-location relationship.

In an embodiment of this application, in a case that the target SRS resource set includes a plurality of SRS resource sets, the part of SRS resources include a plurality of SRS resources, and the plurality of SRS resources meet:
each SRS resource in the plurality of SRS resources comes from each SRS resource set and has a same sequence number in each SRS resource set.

For example, the target SRS resource set includes a first SRS resource set and a second SRS resource set, the plurality of SRS resources include a first SRS resource and a second SRS resource, the first SRS resource comes from the first SRS resource set, the second SRS resource comes from the second SRS resource set, and a sequence (for example, a value of an ID) of the first SRS resource in the first SRS resource set is the same as a sequence of the second SRS resource in the second SRS resource set.

In an embodiment of this application, in a case that the target SRS resource set includes a plurality of SRS resource sets, an association relationship between SRS resource sets in the plurality of SRS resource sets meets at least one of the following:
the association relationship is configured or indicated by a network-side device;
the association relationship is that SRS resource set identifiers of the SRS resource sets in the plurality of SRS resource sets are adjacent;
the association relationship is that SRS resources in the plurality of SRS resource sets have a same spatial relationship and/or quasi-co-location relationship; and
the association relationship is that the plurality of SRS resource sets belong to a same resource set list, where the resource set list is configured by the network-side device through RRC.

In an embodiment of this application, a correspondence between the plurality of SRS resources and port numbers of the ports of the target SRS meets at least one of the following:
(1) a correspondence sequentially based on an identification sequence of SRS resources in the plurality of SRS resources, where
   using 8 ports as an example, according to a default agreement by a network-side device and the terminal, SRS resource 1 corresponds to port numbers { 1000, 1001, 1002, 1003}, and SRS resource 2 corresponds to port numbers {1004, 1005, 1006, 1007};
(2) a correspondence sequentially based on an identification sequence of SRS resource sets to which the plurality of SRS resources belong;
(3) a correspondence based on a sequence of SRS resources in the plurality of SRS resources in a configuration resource list; and
(4) a correspondence based on port numbers configured by a network-side device for each SRS resource in the plurality of SRS resources, where using 8 ports as an example, according to the configuration or indication by the network-side device, SRS resource 1 corresponds to port numbers {1000, 1002, 1004, 1006}, and SRS resource 2 corresponds to port numbers f 1001, 1003, 1005, 1007}.

In an embodiment of this application, target information of each SRS resource in the plurality of SRS resources is the same, and the target information includes at least one of the following:
a cyclic shift;
a comb structure;
a frequency domain mapping position;
a time domain symbol position;
a quantity of repetitions; and
a transmission period.

In an embodiment of this application, a time domain symbol position corresponding to each SRS resource in the plurality of SRS resources meets one of the following:
time domain symbol positions corresponding to the SRS resources are the same;
time domain symbol positions corresponding to the SRS resources are adj acent; and
time domain symbol positions corresponding to the SRS resources are in a same time window. The time window is configured by the network-side device, or agreed by the network-side device and the terminal by default. For example, it is agreed by default that the time window is one slot.

The SRS port mapping method in this application may resolve a problem of SRS port mapping when a quantity of SRS ports is greater than 4, for example, a mapping problem of each port when there are 8 SRS ports, thereby ensuring orthogonality between ports.

It should be noted that the SRS port mapping method provided in this embodiment of this application may be performed by an SRS port mapping apparatus, or a control module configured to perform the SRS port mapping method in the SRS port mapping apparatus.

An SRS port mapping apparatus provided in an embodiment of this application is described by assuming that the SRS port mapping method is performed by the SRS port mapping apparatus in the following embodiment.

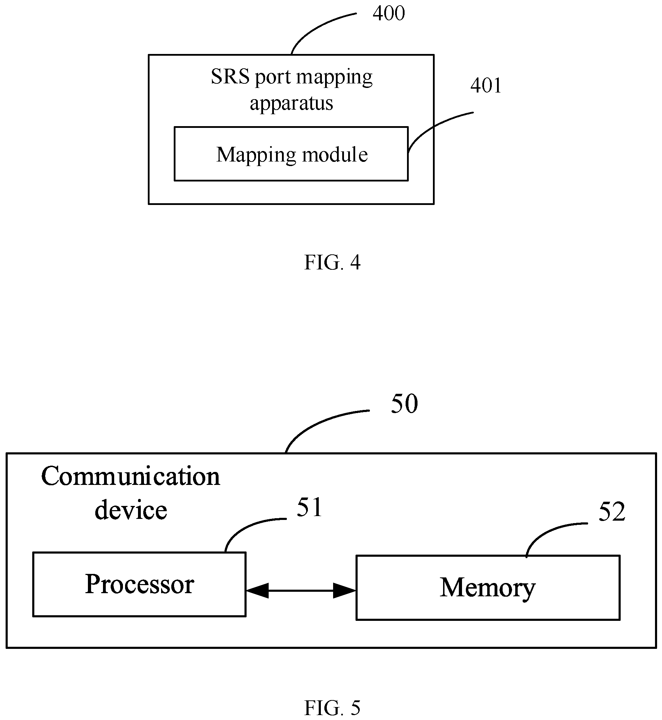

FIG. 4 is a structural diagram of an SRS port mapping apparatus according to an embodiment of this application. The SRS port mapping apparatus 400 includes:
a mapping module 401, configured to map M port groups to N orthogonal frequency division multiplexing OFDM symbols, where M and N are both integers greater than or equal to 1, M is greater than or equal to N, ports of a target sounding reference signal SRS include ports of one or more SRS resources, and the ports of the SRS resources are formed by the M port groups.

Optionally, time domain positions of the N OFDM symbols are determined in at least one of the following manners:
agreed by a network-side device and the terminal by default; and
configured or indicated by the network-side device.

Optionally, the time domain positions of the N OFDM symbols are agreed by the network-side device and the terminal by default as N consecutive time domain positions.

Optionally, at least one of a value of M, a value of N, a quantity of ports corresponding to each of the M port groups, port numbers corresponding to each of the M port groups, a quantity of ports mapped to each OFDM symbol, and port numbers mapped to each OFDM symbol is determined in one of the following manners:
agreed by a network-side device and the terminal by default; and
configured or indicated by the network-side device.

Optionally, there is an association relationship between at least two of a value of M, a value of N, a quantity of ports corresponding to each of the M port groups, port numbers corresponding to each of the M port groups, a quantity of ports mapped to each OFDM symbol, port numbers mapped to each OFDM symbol, a comb structure of the target SRS, a quantity of repetitions of the target SRS, and a start symbol position of the target SRS.

Optionally, the N OFDM symbols are located in a same slot.

Optionally, the M port groups correspond to a same quantity of ports.

Optionally, the M port groups meet at least one of the following transmission characteristics:
the M port groups correspond to a same cyclic shift;
the M port groups correspond to a same frequency domain mapping position;
the M port groups correspond to same antenna virtualization;
the M port groups correspond to same precoding;
the M port groups correspond to same analog beamforming;
the M port groups correspond to same transmit power; and
frequency hopping is not allowed among the M port groups.

Optionally, a first port group is any one of the M port groups, and port mapping is performed on the first port group according to a mapping rule corresponding to a quantity of ports in the first port group.

Optionally, the ports of the target SRS include ports of a plurality of SRS resources, and the plurality of SRS resources include one of the following:
SRS resources in an SRS resource set;
SRS resources in a plurality of SRS resource sets; and
SRS resources determined based on a same resource list.

Optionally, the plurality of SRS resources are indicated by an SRS resource indicator SRI.

Optionally, a quantity of the ports of the target SRS is a sum of quantities of ports of all SRS resources in a target SRS resource set;
or
a quantity of the ports of the target SRS is a sum of quantities of ports of a part of SRS resources in a target SRS resource set, where
the target SRS resource set includes one SRS resource set or a plurality of SRS resource sets.

Optionally, in a case that the target SRS resource set includes one SRS resource set, the part of SRS resources are configured or indicated by a network-side device.

Optionally, in a case that the target SRS resource set includes one SRS resource set, SRS resource identifiers of SRS resources in the part of SRS resources are adj acent.

Optionally, a first SRS resource in the part of SRS resources is determined in at least one of the following manners:
agreed by a network-side device and the terminal by default; and
configured or indicated by the network-side device.

Optionally, in a case that the target SRS resource set includes one SRS resource set, an association relationship between SRS resources in the part of SRS resources meets at least one of the following:
the association relationship is configured or indicated by a network-side device; and
the association relationship is that the SRS resources in the part of SRS resources have a same spatial relationship and/or quasi-co-location relationship.

Optionally, in a case that the target SRS resource set includes a plurality of SRS resource sets, the part of SRS resources include a plurality of SRS resources, and the plurality of SRS resources meet:
each SRS resource in the plurality of SRS resources comes from each SRS resource set and has a same sequence number in each SRS resource set.

Optionally, in a case that the target SRS resource set includes a plurality of SRS resource sets, an association relationship between SRS resource sets in the plurality of SRS resource sets meets at least one of the following:
the association relationship is configured or indicated by a network-side device;
the association relationship is that SRS resource set identifiers of the SRS resource sets in the plurality of SRS resource sets are adjacent;
the association relationship is that SRS resources in the plurality of SRS resource sets have a same spatial relationship and/or quasi-co-location relationship; and
the association relationship is that the plurality of SRS resource sets belong to a same resource set list.

Optionally, the plurality of SRS resources correspond to port numbers of the ports of the target SRS according to at least one of the following correspondence rules:
a correspondence sequentially based on an identification sequence of SRS resources in the plurality of SRS resources;
a correspondence sequentially based on an identification sequence of SRS resource sets to which the plurality of SRS resources belong;
a correspondence based on a sequence of SRS resources in the plurality of SRS resources in a configuration resource list; and
a correspondence based on port numbers configured by a network-side device for each SRS resource in the plurality of SRS resources.

Optionally, target information of each SRS resource in the plurality of SRS resources is the same, and the target information includes at least one of the following:
a cyclic shift;
a comb structure;
a frequency domain mapping position;
a time domain symbol position;
a quantity of repetitions; and
a transmission period.

Optionally, a time domain symbol position corresponding to each SRS resource in the plurality of SRS resources meets one of the following:
time domain symbol positions corresponding to the SRS resources are the same;
time domain symbol positions corresponding to the SRS resources are adj acent; and
time domain symbol positions corresponding to the SRS resources are in a same time window.

The SRS port mapping apparatus 400 in this embodiment of this application may be an apparatus, or may be a component, an integrated circuit, or a chip in a terminal.

The SRS port mapping apparatus 400 in this embodiment of this application may be an apparatus having an operating system. The operating system may be an Android (Android) operating system, an iOS operating system, or other possible operating systems, and is not specifically limited in this embodiment of this application.

The SRS port mapping apparatus 400 provided in this embodiment of this application can implement each process implemented in the method embodiment in FIG. 2, with the same technical effect achieved. To avoid repetition, details are not described herein again.

Optionally, as shown in FIG. 5, an embodiment of this application further provides a communication device 50, including a processor 51, a memory 52, and a program or instructions stored in the memory 52 and capable of running on the processor 51. For example, when the communication device 50 is a terminal, and the program or instructions are executed by the processor 51, each process of the foregoing embodiment of the SRS port mapping method in FIG. 2 is implemented, with the same technical effect achieved.

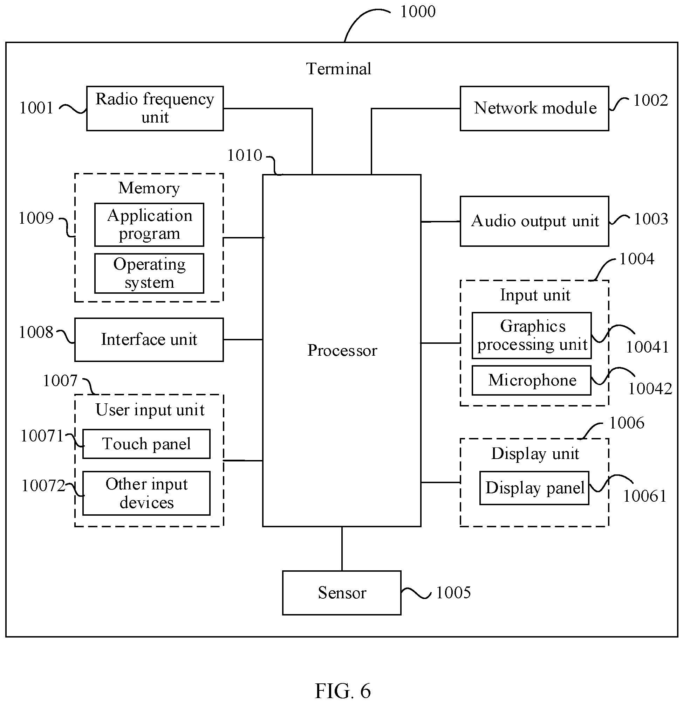

FIG. 6 is a schematic diagram of a hardware structure of a terminal for implementing an embodiment of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) supplying power to all components. The power supply may be logically connected to the processor 1010 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1001 sends the downlink data to the processor 1010 for processing, and in addition, sends uplink data to a base station. Usually, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may primarily include a program or instruction storage area and a data storage area. The program or instruction storage area may store an operating system, an application program or instructions (such as an audio play function and an image play function) required by at least one function, and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, the processor 1010 may integrate an application processor and a modem processor. The application processor mainly processes the operating system, a user interface, an application program, or instructions. The modem processor mainly processes wireless communication. For example, the modem processor is a baseband processor. It may be understood that the modem processor may alternatively not be integrated in the processor 1010.

The processor 1010 is configured to map M port groups to N orthogonal frequency division multiplexing OFDM symbols, where M and N are both integers greater than or equal to 1, M is greater than or equal to N, ports of a target sounding reference signal SRS include ports of one or more SRS resources, and the ports of the SRS resources are formed by the M port groups.

Further, time domain positions of the N OFDM symbols are determined in at least one of the following manners:
agreed by a network-side device and the terminal by default; and
configured or indicated by the network-side device.

Further, the time domain positions of the N OFDM symbols are agreed by the network-side device and the terminal by default as N consecutive time domain positions.

Further, at least one of a value of M, a value of N, a quantity of ports corresponding to each of the M port groups, port numbers corresponding to each of the M port groups, a quantity of ports mapped to each OFDM symbol, and port numbers mapped to each OFDM symbol is determined in one of the following manners:
agreed by a network-side device and the terminal by default; and
configured or indicated by the network-side device.

Further, there is an association relationship between at least two of a value of M, a value of N, a quantity of ports corresponding to each of the M port groups, port numbers corresponding to each of the M port groups, a quantity of ports mapped to each OFDM symbol, port numbers mapped to each OFDM symbol, a comb structure of the target SRS, a quantity of repetitions of the target SRS, and a start symbol position of the target SRS.

Further, the N OFDM symbols are located in a same slot.

Further, the M port groups correspond to a same quantity of ports.

Further, the M port groups meet at least one of the following transmission characteristics:
the M port groups correspond to a same cyclic shift;
the M port groups correspond to a same frequency domain mapping position;
the M port groups correspond to same antenna virtualization;
the M port groups correspond to same precoding;
the M port groups correspond to same analog beamforming;
the M port groups correspond to same transmit power; and
frequency hopping is not allowed among the M port groups.

Further, a first port group is any one of the M port groups, and port mapping is performed on the first port group according to a mapping rule corresponding to a quantity of ports in the first port group.

Further, the ports of the target SRS include ports of a plurality of SRS resources, and the plurality of SRS resources include one of the following:
SRS resources in an SRS resource set;
SRS resources in a plurality of SRS resource sets; and
SRS resources determined based on a same resource list.

Further, the plurality of SRS resources are indicated by an SRS resource indicator SRI.

Further, a quantity of the ports of the target SRS is a sum of quantities of ports of all SRS resources in a target SRS resource set;
or
a quantity of the ports of the target SRS is a sum of quantities of ports of a part of SRS resources in a target SRS resource set, where
the target SRS resource set includes one SRS resource set or a plurality of SRS resource sets.

Further, in a case that the target SRS resource set includes one SRS resource set, the part of SRS resources are configured or indicated by a network-side device.

Further, in a case that the target SRS resource set includes one SRS resource set, SRS resource identifiers of SRS resources in the part of SRS resources are adjacent.

Further, a first SRS resource in the part of SRS resources is determined in at least one of the following manners:
agreed by a network-side device and the terminal by default; and
configured or indicated by the network-side device.

Further, in a case that the target SRS resource set includes one SRS resource set, an association relationship between SRS resources in the part of SRS resources meets at least one of the following:
the association relationship is configured or indicated by a network-side device; and
the association relationship is that the SRS resources in the part of SRS resources have a same spatial relationship and/or quasi-co-location relationship.

Further, in a case that the target SRS resource set includes a plurality of SRS resource sets, the part of SRS resources include a plurality of SRS resources, and the plurality of SRS resources meet:
each SRS resource in the plurality of SRS resources comes from each SRS resource set and has a same sequence number in each SRS resource set.

Further, in a case that the target SRS resource set includes a plurality of SRS resource sets, an association relationship between SRS resource sets in the plurality of SRS resource sets meets at least one of the following:
the association relationship is configured or indicated by a network-side device;
the association relationship is that SRS resource set identifiers of the SRS resource sets in the plurality of SRS resource sets are adjacent;
the association relationship is that SRS resources in the plurality of SRS resource sets have a same spatial relationship and/or quasi-co-location relationship; and
the association relationship is that the plurality of SRS resource sets belong to a same resource set list.

Further, the plurality of SRS resources correspond to port numbers of the ports of the target SRS according to at least one of the following correspondence rules:
a correspondence sequentially based on an identification sequence of SRS resources in the plurality of SRS resources;
a correspondence sequentially based on an identification sequence of SRS resource sets to which the plurality of SRS resources belong;
a correspondence based on a sequence of SRS resources in the plurality of SRS resources in a configuration resource list; and
a correspondence based on port numbers configured by a network-side device for each SRS resource in the plurality of SRS resources.

Further, target information of each SRS resource in the plurality of SRS resources is the same, and the target information includes at least one of the following:
a cyclic shift;
a comb structure;
a frequency domain mapping position;
a time domain symbol position;
a quantity of repetitions; and
a transmission period.

Further, a time domain symbol position corresponding to each SRS resource in the plurality of SRS resources meets one of the following:
time domain symbol positions corresponding to the SRS resources are the same;
time domain symbol positions corresponding to the SRS resources are adj acent; and
time domain symbol positions corresponding to the SRS resources are in a same time window.

The terminal 1000 provided in the foregoing embodiment can implement each process implemented in the method embodiment in FIG. 2, with the same technical effect achieved. To avoid repetition, details are not described herein again.

An embodiment of this application further provides a readable storage medium. The readable storage medium stores a program or instructions. When the program or instructions are executed by a processor, each process of the method embodiment in FIG. 2 is implemented, with the same technical effect achieved. To avoid repetition, details are not described herein again.

The processor is a processor in the terminal or network-side device in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions on a network-side device to implement each process of the method embodiment in FIG. 2, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An SRS port mapping method, comprising:
mapping, by a terminal, M port groups to N orthogonal frequency division multiplexing OFDM symbols, wherein M and N are both integers greater than or equal to 1, M is greater than or equal to N, ports of a target sounding reference signal SRS comprise ports of one or more SRS resources, and the ports of the SRS resources are formed by the M port groups.

2. The method according to claim 1, wherein time domain positions of the N OFDM symbols are determined in at least one of the following manners:
agreed by a network-side device and the terminal by default; and
configured or indicated by the network-side device.

3. The method according to claim 2, wherein the time domain positions of the N OFDM symbols are agreed by the network-side device and the terminal by default as N consecutive time domain positions.

4. The method according to claim 1, wherein at least one of a value of M, a value of N, a quantity of ports corresponding to each of the M port groups, port numbers corresponding to each of the M port groups, a quantity of ports mapped to each OFDM symbol, and port numbers mapped to each OFDM symbol is determined in one of the following manners:
agreed by a network-side device and the terminal by default; and
configured or indicated by the network-side device.

5. The method according to claim 1, wherein there is an association relationship between at least two of a value of M, a value of N, a quantity of ports corresponding to each of the M port groups, port numbers corresponding to each of the M port groups, a quantity of ports mapped to each OFDM symbol, port numbers mapped to each OFDM symbol, a comb structure of the target SRS, a quantity of repetitions of the target SRS, and a start symbol position of the target SRS.

6. The method according to claim 1, wherein the N OFDM symbols are located in a same slot.

7. The method according to claim 1, wherein the M port groups correspond to a same quantity of ports.

8. The method according to claim 1, wherein the M port groups meet at least one of the following transmission characteristics:
the M port groups correspond to a same cyclic shift;
the M port groups correspond to a same frequency domain mapping position;
the M port groups correspond to same antenna virtualization;
the M port groups correspond to same precoding;
the M port groups correspond to same analog beamforming;
the M port groups correspond to same transmit power; and
frequency hopping is not allowed among the M port groups.

9. The method according to claim 1, wherein a first port group is any one of the M port groups, and port mapping is performed on the first port group according to a mapping rule corresponding to a quantity of ports in the first port group.

10. The method according to claim 1, wherein the ports of the target SRS comprise ports of a plurality of SRS resources, and the plurality of SRS resources comprise one of the following:
SRS resources in an SRS resource set;
SRS resources in a plurality of SRS resource sets; and
SRS resources determined based on a same resource list.

11. The method according to claim 10, wherein the plurality of SRS resources are indicated by an SRS resource indicator SRI.

12. The method according to claim 1, wherein a quantity of the ports of the target SRS is a sum of quantities of ports of all SRS resources in a target SRS resource set;
or
a quantity of the ports of the target SRS is a sum of quantities of ports of a part of SRS resources in a target SRS resource set, wherein
the target SRS resource set comprises one SRS resource set or a plurality of SRS resource sets.

13. The method according to claim 12, wherein in a case that the target SRS resource set comprises one SRS resource set, the part of SRS resources are configured or indicated by a network-side device.

14. The method according to claim 12, wherein in a case that the target SRS resource set comprises one SRS resource set, SRS resource identifiers of SRS resources in the part of SRS resources are adjacent.

15. The method according to claim 14, wherein a first SRS resource in the part of SRS resources is determined in at least one of the following manners:
agreed by a network-side device and the terminal by default; and
configured or indicated by the network-side device.

16. The method according to claim 12, wherein in a case that the target SRS resource set comprises one SRS resource set, an association relationship between SRS resources in the part of SRS resources meets at least one of the following:
the association relationship is configured or indicated by a network-side device; and
the association relationship is that the SRS resources in the part of SRS resources have a same spatial relationship and/or quasi-co-location relationship.

17. The method according to claim 12, wherein in a case that the target SRS resource set comprises a plurality of SRS resource sets, the part of SRS resources comprise a plurality of SRS resources, and the plurality of SRS resources meet:
each SRS resource in the plurality of SRS resources comes from each SRS resource set and has a same sequence number in each SRS resource set.

18. The method according to claim 12, wherein in a case that the target SRS resource set comprises a plurality of SRS resource sets, an association relationship between SRS resource sets in the plurality of SRS resource sets meets at least one of the following:
the association relationship is configured or indicated by a network-side device;
the association relationship is that SRS resource set identifiers of the SRS resource sets in the plurality of SRS resource sets are adjacent;
the association relationship is that SRS resources in the plurality of SRS resource sets have a same spatial relationship and/or quasi-co-location relationship; and
the association relationship is that the plurality of SRS resource sets belong to a same resource set list.

19. The method according to claim 10, wherein the plurality of SRS resources correspond to port numbers of the ports of the target SRS according to at least one of the following correspondence rules:
a correspondence sequentially based on an identification sequence of SRS resources in the plurality of SRS resources;
a correspondence sequentially based on an identification sequence of SRS resource sets to which the plurality of SRS resources belong;
a correspondence based on a sequence of SRS resources in the plurality of SRS resources in a configuration resource list; and
a correspondence based on port numbers configured by a network-side device for each SRS resource in the plurality of SRS resources.

20. The method according to claim 10, wherein target information of each SRS resource in the plurality of SRS resources is the same, and the target information comprises at least one of the following:
a cyclic shift;
a comb structure;
a frequency domain mapping position;
a time domain symbol position;
a quantity of repetitions; and
a transmission period.

21. The method according to claim 10, wherein a time domain symbol position corresponding to each SRS resource in the plurality of SRS resources meets one of the following:
time domain symbol positions corresponding to the SRS resources are the same;
time domain symbol positions corresponding to the SRS resources are adjacent; and
time domain symbol positions corresponding to the SRS resources are in a same time window.

22. An SRS port mapping apparatus, comprising:
a mapping module, configured to map M port groups to N orthogonal frequency division multiplexing OFDM symbols, wherein M and N are both integers greater than or equal to 1, M is greater than or equal to N, ports of a target sounding reference signal SRS comprise ports of one or more SRS resources, and the ports of the SRS resources are formed by the M port groups.

23. The apparatus according to claim 22, wherein at least one of a value of M, a value of N, a quantity of ports corresponding to each of the M port groups, port numbers corresponding to each of the M port groups, a quantity of ports mapped to each OFDM symbol, and port numbers mapped to each OFDM symbol is determined in one of the following manners:
agreed by a network-side device and a terminal by default; and
configured or indicated by the network-side device.

24. The apparatus according to claim 22, wherein there is an association relationship between at least two of a value of M, a value of N, a quantity of ports corresponding to each of the M port groups, port numbers corresponding to each of the M port groups, a quantity of ports mapped to each OFDM symbol, port numbers mapped to each OFDM symbol, a comb structure of the target SRS, a quantity of repetitions of the target SRS, and a start symbol position of the target SRS.

25. A terminal, comprising a processor, a memory, and a program or instructions stored in the memory and capable of running on the processor, wherein when the program or instructions are executed by the processor, the steps of the SRS port mapping method according to any one of claims 1 to 21 are implemented.

26. A readable storage medium, wherein the readable storage medium stores a program or instructions, and when the program or instructions are executed by a processor, the steps of the SRS port mapping method according to any one of claims 1 to 21 are implemented.
